Europäisches Patentamt

European Patent Office

Office européen des brevets

(19)

(11) Veröffentlichungsnummer : **0 185 006**
**B1**

(12) # EUROPÄISCHE PATENTSCHRIFT

(45) Veröffentlichungstag der Patentschrift :
11.01.89

(21) Anmeldenummer : 85890168.9

(22) Anmeldetag : 30.07.85

(51) Int. Cl.⁴ : **F 16 G   3/10, B 65 G 15/36**

(54) **Verbindung der Enden von Fördergurten.**

(30) Priorität : 13.12.84 AT 3954/84

(43) Veröffentlichungstag der Anmeldung :
18.06.86 Patentblatt 86/25

(45) Bekanntmachung des Hinweises auf die Patenterteilung : 11.01.89 Patentblatt 89/02

(84) Benannte Vertragsstaaten :
AT BE CH DE FR GB IT LI NL SE

(56) Entgegenhaltungen :
DE--A-- 2 557 025
DE--A-- 2 644 447
DE--A-- 2 717 034
DE--A-- 2 837 625
DE--A-- 2 916 253
DE--A-- 3 238 584
DE--B-- 1 066 136
DE--B-- 2 511 671
GB--A-- 2 053 086

(73) Patentinhaber : **Semperit Aktiengesellschaft**
**Modecenterstrasse 22**
**A-1031 Wien (AT)**

(72) Erfinder : **Magritsch, Anna, Dipl.-Ing.**
**Erlaufstrasse 16/8**
**A-2344 Maria Enzersdorf (AT)**
Erfinder : **Ecker, Heinrich**
**Eugengasse 23**
**A-2500 Baden (AT)**

(74) Vertreter : **Müller, Hans-Jürgen, Dipl.-Ing. et al**
**Müller, Schupfner & Gauger Lucile-Grahn-Strasse 38**
**Postfach 80 13 69**
**D-8000 München 80 (DE)**

EP 0 185 006 B1

## Beschreibung

Die Erfindung betrifft eine Verbindung der Enden von Fördergurten mit elastomerem Material der im Oberbegriff des Patentanspruchs 1 genannten Gattung.

Eine derartige Verbindung ist bereits aus der GB-A-2 053 086 bekannt. Dabei sind die Enden des Fördergurts hinsichtlich der Zugträgerlage jeweils fingerartig derart ausgebildet, daß die Finger des einen Endes zu den Fingern des anderen Endes so versetzt sind, daß diese beim Verbinden ineinandergefügt werden können. Unterhalb und oberhalb der fingerartigen bzw. kammartigen Verbindung der Gurtenden sind Querfäden aufweisende Lagen angeordnet. Die Querfäden verlaufen unter einem Neigungswinkel von 90° zu den in Laufrichtung angeordneten Zugträgern. Dabei bestehen die Querfädenlagen aus solchem Gewebe, das mit Polyurethan-Kunststoff imprägniert ist und dessen Fäden eine geringe Dehnung aufweisen.

Darüber hinaus ist eine andere Verbindung ähnlicher Gattung aus der DE-A-3 238 584 bekannt, bei der die Fördergurtenden abgestuft und aneinander angepaßt ineinandergelegt sind und bei der nach dem Entfernen der mittleren Gummischicht eine gummierte Gewebeeinlage eingebaut ist, bei der die aus aromatischem Polyamid bestehenden Kordfäden in Laufrichtung oder einer davon nur geringfügig abweichenden Richtung verlaufen. Dabei wird empfohlen, für die Kordfäden ein Fasermaterial mit einer Stärke zwischen 1 500 und 2 000 dtex zu verwenden. Die Aramid-Fasern sind vorzugsweise verzwirnt und haben die Aufgabe, Gurtzugkräfte, die in Laufrichtung entstehen, aufzunehmen.

Der Erfindung liegt die Aufgabe zugrunde, der Verbindung eine hohe Quersteifigkeit quer zur Laufrichtung zu verleihen und die Möglichkeit zu geben, genügend hohe Zugkräfte auch bei einer in Laufrichtung kurzen Verbindung aufzunehmen.

Die Erfindung ist im Patentanspruch 1 gekennzeichnet und in Unteransprüchen sind weitere Ausbildungen derselben beansprucht.

Bei der Erfindung werden die unter einem Neigungswinkel von mindestens 45° zur Laufrichtung ausgerichteten Querkorde dadurch versteift bzw. zu Steifkorden ausgebildet, daß deren Fäden bzw. Fasern mit einem solchen Haftmittel getränkt werden, das den Korden durch Aushärten die gewünschte Steifigkeit vermittelt, wodurch jeder einzelne Steifkord gewissermaßen als « Monophil » wirkt, obwohl er eigentlich aus einer Mehrzahl, insbesondere Vielzahl, einzelner Fasern bzw. Fäden zusammengesetzt ist.

Obwohl es aus der DE-A-2 911 753 bereits bekannt ist, Fäden aus aromatischem Polyamid einer Feinheit von 1 670 oder 2 500 dtex zu Litzen bzw. Seilen zu vereinen und nach Eintauchen in eine aushärtbare Kunstharzkomposition als Verbindungsmittel zu versteifen, geht es bei der bekannten Ausbildung darum, die Einzelfäden gegeneinander mit dem Ziel einer verbesserten Zugfestigkeit festzulegen. Solche Steiflitzen sind deshalb auch als längsverlaufende Zugträger im Fördergurt angeordnet, damit wie bei dem eingangs zitierten Stand der Technik eine gleichmäßige Zugübertragung in Laufrichtung desselben über dessen Gesamtbreite ermöglicht wird.

Bei der Erfindung werden die Steifkorde aber unter einen Neigungswinkel von mindestens 45° schräg zur Laufrichtung ausgerichtet, ohne daß diese normal, das heißt 90° zur Laufrichtung ausgerichtet, sein müßte.

Die Steifkorde befriedigen hinsichtlich der Biegesteifigkeit bevorzugt dann, wenn sie eine Gesamtstärke von etwa 5 000 bis 25 000 dtex aufweisen.

Als Filamente für die Steifkorde werden insbesondere dehnungsarme volisynthetische Fasern, beispielsweise Polyester- oder Aramidfasern verwendet. Die besonders gute Eignung dieser Fasern basiert auf ihrer Materialfestigkeit bei niedriger Dehnung.

Auf eine lange Haltbarkeit der Verbindungsstelle wirkt es sich weiters positiv aus, wenn erfindungsgemäß die Steifkorde aus den Filamenten durch Verdrehen und Verzwirnen sowie ein Durchtränken mit einem härtbaren Haftmittel und Aushärten deselben gebildet sind.

Hiebei hat es sich weiters als günstig erwiesen, wenn die Steifkorde in der Kordiage in einer Teilung von 5 bis 200 Korden pro 10 cm vorgesehen sind.

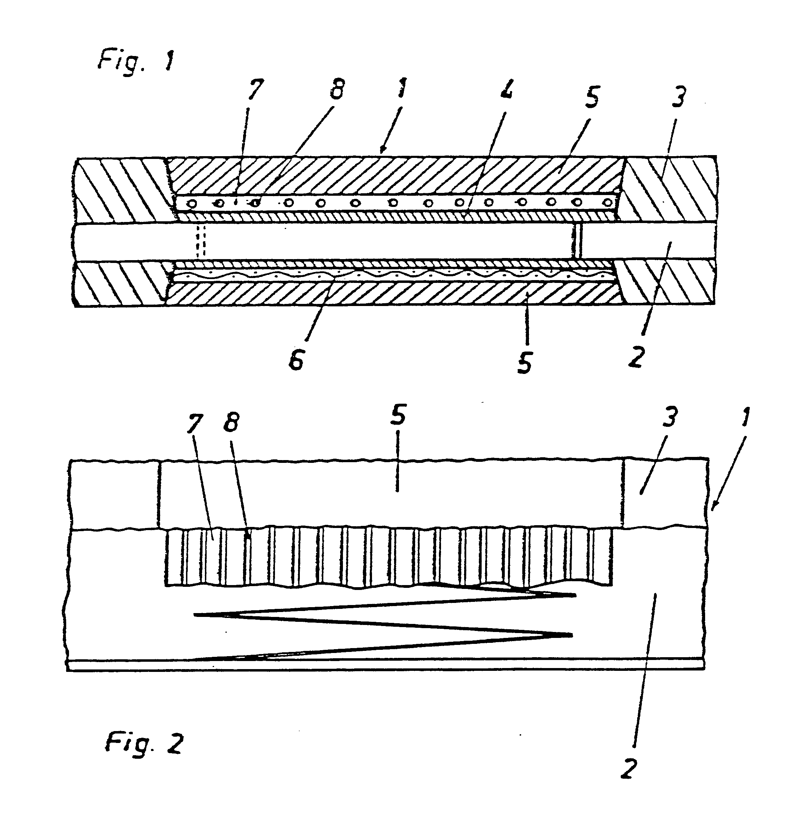

Weitere Merkmale, Vorteile und Einzelheiten der Erfindung werden nun anhand der Zeichnung, die ein Ausführungsbeispiel darstellt, näher beschrieben. Hiebei zeigen : Fig. 1 einen Längsschnitt durch die Verbindungsstelle eines Einlagen-Fördergurtes und Fig. 2 eine Draufsich auf die Gurtoberseite im Verbindungsbereich teilweise ohne Deckplatte und teilweise ohne Verbindungslage.

Der Fördergurt gemäß Fig. 1 enthält einen einlagigen Zugträger 2, der auf an sich bekannte Art und Weise aus einem in ein Elastomer, beispielsweise Gummi oder gummiähnlicher Kunststoff, eingebetteten Werkstoff, beispielsweise Stahl, oder einem Textil, vorzugsweise Aramid, besteht. Der eingebettete Werkstoff kann hiebei als Gewebe vorliegen. Oberhalb und unterhalb des einlagigen Zugträgers 2 ist je eine Deckplatte 3, die ebenfalls aus einem elastomeren Werkstoff, beispielsweise Gummi oder PVC besteht, angeordnet.

In den Zeichnungsfiguren ist die bereits fertiggestellte Verbindungsstelle dargestellt. Hiebei sind die in bekannter Weise auf Finger zugeschnittenen freien Enden der Zugträgerlage 2 ineinander gefügt. Oberhalb und unterhalb der Verbindungsstelle der Zugträgerlage 2 ist je eine Zwischenplatte 4 auf die Zugträgerlage 2 aufgelegt, die ebenfalls aus einer Elastomermischung besteht. Unterhalb der Zugträgerlage 2 ist zwischen dem Deckplatteneinsatz 5 und der Zwischenplatte 4 eine Gewebelage 6 aus textilem, in Elastomer eingebettetem Gewebe angeordnet. Als Textilgewebe ist beispielsweise ein beidseitig gummiertes EP-Gewebe (Polyester/Polyamid) geeignet.

Oberhalb der Zugträgerlage 2 ist auf die Zwischenplatte 4 eine Kordlage 7 aufgelegt, oberhalb welcher sich ebenfalls ein Deckplatteneinsatz 5 befindet. An dieser Stelle sei erwähnt, daß das Vorbereiten der Gurtenden, das Aufbauen der Verbindung und die Vulkanisation der Verbindungsstelle auf herkömmliche bekannte Weise erfolgen kann.

Die Kordlage 7 ist aus in ein Elastomer, beispielsweise Gummi eingebetteten, parallel zueinander verlaufenden Steifkorden 8 aufgebaut. Die Steifkorde 8 sind hiebei quer zur Laufrichtung des Fördergurtes 1 ausgerichtet, können jedoch auch unter einem Winkel bis zu 45° von der Querrichtung abweichend verlaufen. Als Filamente für die Steifkorde 8 finden bevorzugt dehnungsarme, vollsynthetische Fasern, beispielsweise Polyester- oder Aramidfasern Verwendung. Durch Verdrehen und/oder Verzwirnen der Fasern entsteht ein Kord, der einer versteifenden Präparation unterzogen wird. Hiebei wird der Kord mit einer Lösung oder Dispersion aus einem härtbaren Haftmittel, beispielsweise einer Isocyanatlösung oder einem Epoxydharz, durchtränkt. Nach dem Aushärten des Haftmittels, welcher Vorgang vorzugsweise bei erhöhter Temperatur erfolgt, hat eine Versteifung des Kordes zu einem monofilähnlichem Gebilde stattgefunden. Die Steifkorde 8 werden hiebei bevorzugt in einer Gesamtstärke von 5 000 bis 25 000 dtex hergestellt.

Im Bereich der Verbindungsstelle können im Fördergurt eine oder mehrere der beschriebenen Kordlagen 7 angeordnet sein. Es ist auch möglich, abweichend von der dargestellten Konstruktion, anstelle der unterhalb der Zugträgerlage 2 eingelegten Gewebelage 6 zumindest eine Kordlage 7 anzuordnen. Eine derart aufgebaute Verbindungsstelle hat eine lange Lebensdauer auch bei höchster Beanspruchung.

Sind mehrere Kordlagen 7 im Bereich der Verbindungsstelle eingebettet, so kann auch eine Anordnung getroffen werden, bei der sich die innerhalb einer Kordlage vorgesehenen Steifkorde 8 mit den Steifkorden 8 zumindest einer der anderen Kordlagen 7 kreuzen.

## Patentansprüche

1. Verbindung der Enden von Fördergurten mit elastomerem Material, in die mindestens eine Lage von im wesentlichen in Laufrichtung des Fördergurts verlaufenden Längsfäden und mindestens eine Lage mit unter einem Neigungswinkel von insbesondere 90° zur Laufrichtung verlaufenden Querfäden eingebettet sind, und bei der die Enden mindestens einer Lage im Bereich der Verbindung fingerartig ausgebildet und ineinandergefügt sind, dadurch gekennzeichnet, daß die Längsfäden als Zugträger (2) in einer von der die Querfäden aufweisenden Lage durch mindestens eine elastomere Zwischenlage (4) getrennte einzige Zugträgerlage angeordnet sind und daß die Querfäden aus unter einem Neigungswinkel von mindestens 45° zur Laufrichtung angeordneten, verzwirnten und/oder verdrehten Einzelfäden bzw. -fasern bestehen, durch ein ausgehärtetes Haftmittel zu Steifkorden (8) vereint sind und die betreffende Lage zu einer Versteifungslage (7) versteifen.

2. Verbindung nach Anspruch 1, dadurch gekennzeichnet, daß die Steifkorde (8) eine Gesamtstärke von etwa 5 000 bis 25 000 dtex aufweisen.

3. Verbindung nach Anspruch 1 oder 2, dadurch gekennzeichnet, daß zumindest zwei Versteifungslagen (7) vorgesehen sind, bei denen sich die Steifkorde (8) untereinander kreuzen.

4. Verbindung nach einem der vorhergehenden Ansprüche, dadurch gekennzeichnet, daß für die Steifkorde (8) dehnungsarme vollsynthetische Fasern verwendet sind.

5. Verbindung nach Anspruch 4, dadurch gekennzeichnet, daß Polyester oder aromatische Polyamide aus aromatischen Diaminen und Arylendicarbonsäuren für die vollsynthetischen Fasern verwendet sind.

6. Verbindung nach einem der vorhergehenden Ansprüche, dadurch gekennzeichnet, daß die Steifkorde (8) aus verdrehten und verzwirnten Filamenten gebildet und mit dem härtbaren Haftmittel durchtränkt sind.

7. Verbindung nach einem der vorhergehenden Ansprüche, dadurch gekennzeichnet, daß als härtbares Haftmittel Isocyanat oder Epoxidharz verwendet ist.

8. Verbindung nach einem der vorhergehenden Ansprüche, dadurch gekennzeichnet, daß die Steifkorde (8) in den Versteifungslagen (7) in einer Teilung von 5 bis 200 Korden pro ccm verwendet sind.

## Claims

1. A connection of the ends of conveyor belts with elastomeric material into which are embedded at least one layer of longitudinal filaments which extend substantially in the running direction of the conveyor belt and at least one layer comprising transverse filaments which extend at an angle of inclination of in particular 90° to the running direction and where, in the region of the connection, the ends of at least one layer are finger-shaped and interlock with one another, characterised in that the longitudinal filaments are arranged as tension carriers (2) in a single tension carrier layer which is separated from the layer comprising the transverse filaments by at least one elastomeric intermediate layer (4) and that the transverse filaments consist of entwined and/or twisted individual filaments or fibres which are arranged at an angle of inclination of at least 45° to the running direction, are combined by means of a hardened bonding agent to form stiff cords (8), and stiffen the layer in question to form a stiffening layer (7).

2. A connection as claimed in Claim 1, characterised in that the stiff cords (8) have an overall thickness of about 5 000 to 25 000 dtex.

3. A connection as claimed in Claim 1 or 2, characterised in that at least two stiffening layers (7) are provided in which the stiff cords (8) cross one under another.

4. A connection as claimed in one of the preceding Claims, characterised in that fully synthetic fibres of limited extensibility are used for the stiff cords (8).

5. A connection as claimed in Claim 4, characterised in that polyesters or aromatic polyamides consisting of aromatic diamines and arylenedicarboxylic acids are used for the fully synthetic fibres.

6. A connection as claimed in one of the preceding Claims, characterised in that the stiff cords (8) are formed from twisted and entwined filaments and are saturated with the hardenable bonding agent.

7. A connection as claimed in one of the preceding Claims, characterised in that an isocyanate or epoxide resin is used as hardenable bonding agent.

8. A connection as claimed in one of the preceding Claims, characterised in that the stiff cords (8) are used in the stiffening layers (7) in a proportion of 5 to 200 cords per ccm.

**Revendications**

1. Liaison des extrémités de courroies ou bandes transporteuses en matière élastomère, dans lesquelles sont incorporées au moins une couche de fils longitudinaux s'étendant sensiblement dans la direction de marche de la courroie transporteuse et au moins une couche de fils transversaux s'étendant sous un angle d'inclinaison de notamment 90° par rapport à la direction de marche et dans laquelle les extrémités d'au moins une couche sont conçues en forme de doigts dans la zone de la liaison et s'emboîtent l'une dans l'autre, caractérisée en ce que, les fils longitudinaux sont agencés en tant que longrines ou tirants (2) dans une couche unique de longrines séparée par la couche présentant les fils transversaux par au moins une couche intermédiaire (4) en élastomère et en ce que les fils transversaux consistent en des fils ou fibres uniques tordus et/ou retordus sous un angle d'inclinaison d'au moins 45° par rapport à la direction de marche, sont réunis par un agent d'adhérence durci, en cordes de renforcement (8) et renforcent la couche correspondante en une couche de renforcement (7).

2. Liaison selon la revendication 1, caractérisée en ce que les cordes de renforcement (8) présentent une densité globale d'environ 5 000 à 25 000 dtex.

3. Liaison selon la revendication 1 ou 2, caractérisée en ce que sont prévues au moins deux couches de renforcement (7) dans lesquelles s'entrecroisent les cordes de renforcement (8).

4. Liaison selon l'une des revendications précédentes, caractérisée en ce que l'on utilise des fibres entièrement synthétiques, faiblement extensibles pour les cordes de renforcement (8).

5. Liaison selon la revendication 4, caractérisée en ce que pour les fibres entièrement synthétiques, on utilise des polyesters ou des polyamides aromatiques provenant de diamines aromatiques et d'acides arylène-dicarboxyliques.

6. Liaison selon l'une des revendications précédentes, caractérisée en ce que les cordes de renforcement (8) sont formées de filaments tordus et retordus et imprégnées de l'agent d'adhérence durcissable.

7. Liaison selon l'une des revendications précédentes, caractérisée en ce qu'en tant qu'agent d'adhérence, durcissable, on utilise un isocyanate ou une résine époxyde.

8. Liaison selon l'une des revendications précédentes, caractérisée en ce que les cordes de renforcement (8) sont utilisées dans les couches de renforcement (7) selon une répartition de 5 à 200 cordes par cm³.

Fig. 1

Fig. 2